# EUROPÄISCHE PATENTSCHRIFT

(11) **EP 0 913 373 B1**
(45) Veröffentlichungstag und Bekanntmachung des Hinweises auf die Patenterteilung: **24.04.2002**
(21) Anmeldenummer: 98117802.3
(22) Anmeldetag: 19.09.1998
(51) Int. Cl.: C04B 41/89, C04B 35/80

(54) **Mit Kohlefasern verstärkter Keramikverbundwerkstoff**
Ceramic composite reinforced with carbon fibers
Matériau composite céramique renforcé par des fibres de carbone

(30) Priorität: 22.10.1997 DE 19746598
(43) Veröffentlichungstag der Anmeldung: 06.05.1999
(73) Patentinhaber: DORNIER GmbH, 88039 Friedrichshafen (DE)
(72) Erfinder: Kayser, Ursula, 88090 Immenstaad (DE); Haug, Tilmann Dr., 88690 Mühlhofen (DE); Hertel, Doris, 88048 Friedrichshafen (DE); Rebstock, Kolja, 89073 Ulm (DE); Schaefer, Wolfgang Dr., 88048 Friedrichshafen (DE); Knabe, Helmut, 88046 Friedrichshafen (DE); Vogel, Walter Dr., 88682 Salem-Neufrach (DE)
(74) Vertreter: Meel, Thomas

(56) Entgegenhaltungen:
- US-A- 5 536 574
- HAUG, T. ET AL: "Herstellverfahren für oxidationsbeständige faserverstärkte Keramiken" WERKST.- VERFAHRENSTECH., SYMP. 6, WERKSTOFFWOCHE '96, HERAUSGEBER: ZIEGLER, G., DGM INFORMATIONSGESELLSCHAFT,1997, Seiten 943-954, XP002105058 Oberursel
- DATABASE WPI Section Ch, Week 9649 Derwent Publications Ltd., London, GB; Class F06, AN 96-493682 XP002105059 & JP 08 253876 A (KAWASAKI STEEL CORP) , 1. Oktober 1996

## Beschreibung

Die Erfindung betrifft einen mit C-Fasern verstärkten Keramik-Verbundwerkstoff. Faserverstärkte Keramikverbundwerkstoffe sind hochtemperaturbeständig, leicht und besitzen im Gegensatz zu monolithischen, das heisst nicht mit Fasern verstärkten Keramiken eine geringe Sprödigkeit, das heisst eine hohe Schadenstoleranz. Sie eignen sich deshalb gut als Konstruktionswerkstoffe für Hochtemperaturbauteile in der Luft- und Raumfahrt, wie z.B. Hitzeschilde, heisse Flügelvorderkanten oder Nasen von Raumtransportsystemen, Triebwerken von Raketen oder Bauteile von Flugtriebwerken.

Wegen ihres bei hohen Temperaturen günstigen Verhältnisses von Festigkeit zu Dichte und/oder Steifigkeit zu Dichte sowie der Möglichkeit, auf zusätzliche thermische Isolation zu verzichten, können mit faserverstärkten Keramikverbundwerkstoffen deutliche Gewichtseinsparungen gegenüber dem heutigen Stand der Technik erzielt werden.

Die bisher am weitesten entwickelten faserverstärkten Keramikverbundwerkstoffe sind Kohlenstoff-Faser-verstärkter Kohlenstoff (abgekürzt C/C) und Kohlenstoff-Faser-verstärktes Siliciumcarbid (abgekürzt C/SiC). Desweiteren sind noch Verbundwerkstoffe mit Fasern aus SiC (z.B. mit Handelsnamen Tyranno und Nicalon) und aus Al₂O₃, aus dem System Al₂O₃-SiO₂ oder aus dem System Al₂O₃-SiO₂-B₂O₃ (z.B. mit dem Handelsnamen Nextel) in der Entwicklung.

Den bekannten Keramikverbundwerkstoffen mit anderen Fasern als aus Kohlenstoff C ist gemeinsam, dass sie wegen zu geringer thermischer Beständigkeit der Fasern nur bei maximal 1100°C eingesetzt werden können. Dieses Temperaturlimit stellt jedoch für viele Anwendungen in der Luft- und Raumfahrt ein Ausschlußkriterium dar, da z.B. beim Wiedereintritt in die Erdatmosphäre an Raumtransportsystemen oder in Triebwerksteilen von Raketen oder Flugzeugen deutlich höhere Temperaturen auftreten.
Auf der anderen Seite sind alle Materialien, die C-Fasern enthalten, sehr oxidationsempfindlich. Deshalb kann C/C bei hohen Temperaturen nur in sauerstofffreier Atmosphäre oder in Luft nur sehr kurzfristig eingesetzt werden. Doch selbst C/SiC ist im allgemeinen nicht oxidationsstabil, da einerseits C-Fasern vom Rand her oxidieren bzw. andererseits derartige Materialien porös sind und der Sauerstoff durch die Matrixporen an die C-Fasern gelangt und diese oxidiert.

Aufgabe der Erfindung ist es, einen Konstruktionswerkstoff insbesondere für Anwendungen in der Luftfahrt und Raumfahrt zu schaffen, wobei folgende Anforderungen erfüllt sein müssen:
a) Dichte < 2,3 g/cm³
b) anwendbar von Raumtemperatur bis 1600°C
c) Zugfestigkeit über 200 MPa, bei gleichzeitiger Schadenstoleranz, das heisst ohne Sprödbruch
d) Beständigkeit in oxidierender Atmosphäre insbesondere Luft
e) mindestens 50 h Nutzungsdauer
f) beständig gegen mindestens 100-fachen Thermoschock
g) wirtschaftliche Herstellbarkeit komplexer Strukturen.

Es ist bisher kein Konstruktionswerkstoff bekannt, der alle oben genannten Anforderungen gleichzeitig erfüllt. Die Situation bezüglich der Einzelanforderungen ist wie folgt:
a) Dichte < 2,3 g/cm³ und
b) anwendbar von Raumtemperatur bis 1600°C.

Aus der Kombination dieser beiden Anforderungen folgt, dass das Material Kohlenstoff enthalten muss.
c) Zugfestigkeit über 200 MPa, bei gleichzeitiger Schadenstoleranz, das heisst ohne Sprödbruch.

Hieraus ergibt sich die Notwendigkeit eines mit C-Fasern verstärkten Keramikverbundwerkstoffs. Als Matrix sind denkbar: C, SiC, Si₃N₄, SiBCN, SiBN₃C oder ähnliche
d) Beständigkeit in oxidierender Atmosphäre insbesondere Luft.

Zur Vermeidung der Oxidation der C-Fasern wird ein Oxidationsschutzsystem benötigt, üblich sind externe Schutzschichten, z.B. wie sie in [1] beschrieben sind.
e) über 50 h Nutzungsdauer im ganzen Temperaturbereich 20 - 1600°C.

Schutzsysteme, die die C-Fasern in keramischen Verbundwerkstoffen für mehr als 50 h im ganzen Temperaturbereich 20 - 1600°C vor Oxidation schützen, sind nicht bekannt. Da selbst verbesserte Schutzsysteme nicht ausreichen dürften, eine Kohlenstoffmatrix so lange vor Oxidation zu bewahren, kommen nur SiC, Si₃N₄, SiBNC oder ähnliche Nichtoxide als Matrix in Frage. Oxide wie Al₂O₃ und ZrO₂ sind mit der C-Faser nicht verträglich.
f) Beständig gegen mindestens 100-fachen Thermoschock.

Dies stellt insbesondere in Kombination mit der Bedingung, daß der Werkstoff im ganzen Temperaturbereich von 20°C bis 1600°C - also auch dazischen - verwendbar sein muss (siehe b)), eine gegenüber e) verschärfte Anforderung dar. Derartige Werkstoffsysteme sind nicht Stand der Technik [2, 3].
g) Wirtschaftliche Herstellbarkeit komplexer Struktur.

Für extremen Leichtbau in der Luft- und Raumfahrt werden Integralstrukturen angestrebt, analog wie sie heute schon aus C-Faser-verstärkten Kunststoffen hergestellt werden können. Ein hieraus abgeleitetes, ebenfalls endkonturnahes Herstellungsverfahren für C-Faser-verstärkten Keramikverbundwerkstoffe ist das Polymer-Infiltrations- und Pyrolyseverfahren [4, 5, 6]. Es soll deshalb hier anwendbar sein.

Gegenstand der Erfindung ist ein Werkstoff, der die vorgenannten Anforderungen a) bis g) erfüllt, mit folgenden Merkmalen:
- I: Verstärkungsfasern aus C
- II: Matrix aus SiC + C (5 - 30 Gew% Überschußkohlenstoff)
- III: Poren
sowie mindestens zwei der unter den folgenden Merkmalspunkten IV, V und VI genannten Oxidationsschutzschichten:
- IV: Untere Oxidationsschutzschicht mit der Funktion als Grundierung und Oberflächenversiegelung mit an den Grundwerkstoff angepaßten thermischen Ausdehnungskoeffizient aus einem oder mehreren der Materialien SiC, SiO₂, B.
- V: Mittlere Oxidationsschutzschicht mit der Funktion eines Sauerstoffgetters durch Oxidbildung und/oder der lokalen Rißversiegelung durch Glasbildung aus einer oder mehreren Si- oder B-haltigen Verbindungen wie z.B. MoSi₂, Mo₃Si, Mo₅Si₃, SiC, BN, B₄C, Si₃N₄, SiB₆, TaB₂, B, SiBCN, SiBN₃C oder ähnlichen Verbindungen.
- VI: Obere Oxidationsschutzschicht mit der Funktion des Erosionsschutzes und der Anpassung der Strahlungsemission und -Absorption aus einem oder mehreren der Materialien SiC, MoSi₂, Mo₃Si, Mo₅Si₃, ZrB, ZrB₂, ZrB₁₂, Si₃N₄, ZrO₂, Y₂O₃, Al₂O₃, System Al₂O₃-SiO₂.
- VII: Die oben genannten drei Oxidationsschutzschichten können, müssen aber nicht, ihrerseits wieder aus Teilschichten zusammengesetzt sein. Durch mehrere an einzelne Teiltemperaturintervalle angepaßte Teilschichten kann ein von 20°C bis 1600°C durchgängig optimal wirksamer Oxidationsschutz erzielt werden, da einzelne Materialien jeweils nur beschränkte Temperaturbereiche optimal als Oxidationsschutz abdecken können.
- VIII: Hersteilbarkeit des Grundwerkstoffs über das Polymer-Infiltrations- und Pyrolyseverfahren mit dem Ziel komplexer Leichtbaustrukturen. Für die Verarbeitung günstig sind Polymer-Precursoren, die Phenolharz enthalten. Der resultierende C-Überschuß ist durch die umgebende SiC-Matrix und das Oxidationsschutzsystem vor Sauerstoffangriff geschützt.

Mit dem erfindungsgemäßen Werkstoff sind folgende Vorteile verbunden:
α) Der C-Überschuß in der Matrix, der die wirtschaftliche Hersteilbarkeit erleichtert, aber nur zulässig ist, wenn das Oxidationsschutzsystem ausreichend gut wirkt.
β) Die Kombination der Materialien in den (mindestens) 3-schichtigen Oxidationsschutzsystem, mit dem nicht nur einzelne Temperaturintervalle sondern der gesamte Bereich von 20°C bis 1600°C abgedeckt werden kann.
y) Die Anpassung der thermischen Ausdehnung von Schutzschichtsystem untereinander und mit dem Grundwerkstoff parallel und quer zur Faserrichtung, um eine hohe Thermoschockbeständigkeit zu erreichen.

Durch Polymerinfiltration über Faserwickeln und Laminierverfahren, wie sie in der Faserverbundtechnik üblich sind, sowie über nachgeschaltete drucklose Pyrolyse bei 1600°C in Schutzgas wurden Prüfkörper und Bauteile hergestellt. Als Ausgangsmaterialien wurden C-Fasern vom Typ T800 der Firma Toray sowie pyrolysierbare Polymere und anorganische Füllstoffe verwendet. Nach der Pyrolyse wurde die innere Porosität mehrfach mit einem pyrolysierbare Si-Polymer nachinfiltriert und wiederum bei 1600°C pyrolysiert. Damit wurde ein Verbundwerkstoff mit folgender Zusammensetzung realisiert:
- 45: Vol% C-Fasern, orientiert in 0°/90°-Richtung
- 30: Vol% SiC
- 5: Vol% C
- 20: Vol% Poren.

Die drei letzten Bestandteile bilden die Matrix.

Auf diesen Verbundwerkstoff wurde ein mehrschichtiges Oxidationsschutzsystem aufgebracht. Hierzu wurden geeignete Schlicker aus den anorganischen Schichtbestandteilen und organischen Bindemitteln und Lösungsmitteln aufgestrichen und anschließend bei Temperaturen zwischen 900°C und 1400°C in Schutzgas eingebrannt. Mit diesem Verfahren wurde folgendes Schichtsystem realisiert.
1) Untere Schicht direkt auf dem Keramikverbundwerkstoff mit einer Dicke von 30 µm und aus SiC bestehend.
2) Mittlere Schicht mit einer Dicke von 150 µm, ihrerseits bestehend aus 5 Teilschichten aus Übergangsmetallboriden und -siliziden.
3) Obere Schicht mit einer Dicke von 30 µm und aus SiC bestehend.

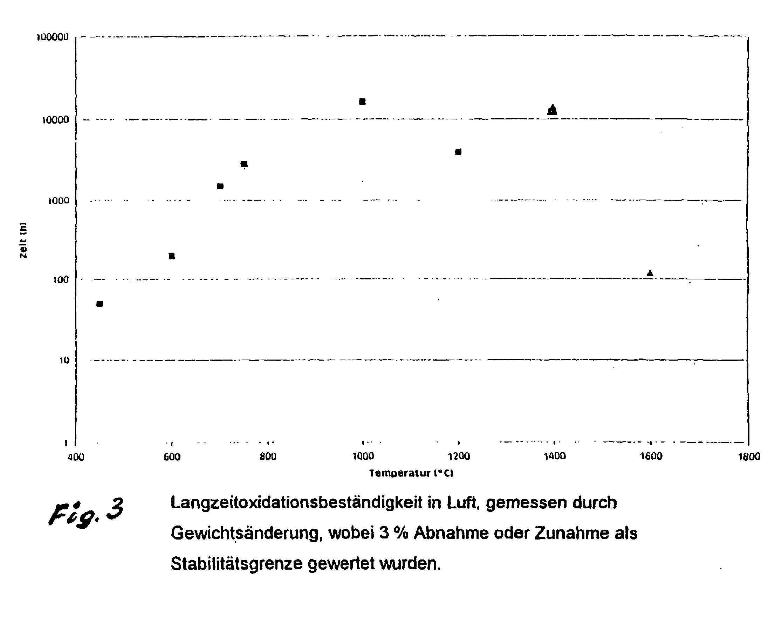

Dieser Werkstoff hat
- eine Dichte von 1,8 g/cm³
- eine Zugfestigkeit von 250 MPa bei Raumtemperatur
- eine Zugfestigkeit von 280 MPa bei 1600°C
- eine Oxidationsbeständigkeit über mehr als 50 h im Temperaturintervall 450°C bis 1600°C (Fig. 3) und über mehr als 1000 h zwischen 750°C und 1400°C
- nachgewiesene Beständigkeit gegen 100-fache thermische Kurzzeitzyklisierung (Thermoschock) für das Temperaturintervall 400 bis 1250°C
- abgestufter thermischer Ausdehnungskoeffizient im ganzen Werkstoffsystem wie folgt:
   - Obere Schicht:: 5,4 x 10⁻⁶ K⁻¹
   = kleiner als mittlere Funktionsschicht, deshalb stabilisiert durch Druckspannungen nach dem Abkühlen von der Herstelltemperatur
   - Mittlere Schicht:: 6,9 x 10⁻⁶ K⁻¹
   = maximaler Wert aller Schichten, drängt in Spalte
   - Untere Schicht:: 5,4 x 10⁻⁶ K⁻¹
   = zwischen Grundwerkstoff und Mittelschicht
   - Grundwerkstoff:: 1,8 x 10⁻⁶ K⁻¹
   (in Faserrichtung bei 0°/90° Lagenaufbau)
   6,8 x 10⁻⁶ K⁻¹
   (quer zur Faserrichtung bei 0°/90° Lagenaufbau)

Die Werte beziehen sich auf das Temperaturintervall 200°C bis 1000°C.

Zur Erläuterung der Erfindung dienen nachfolgende Figuren:
Es zeigen:

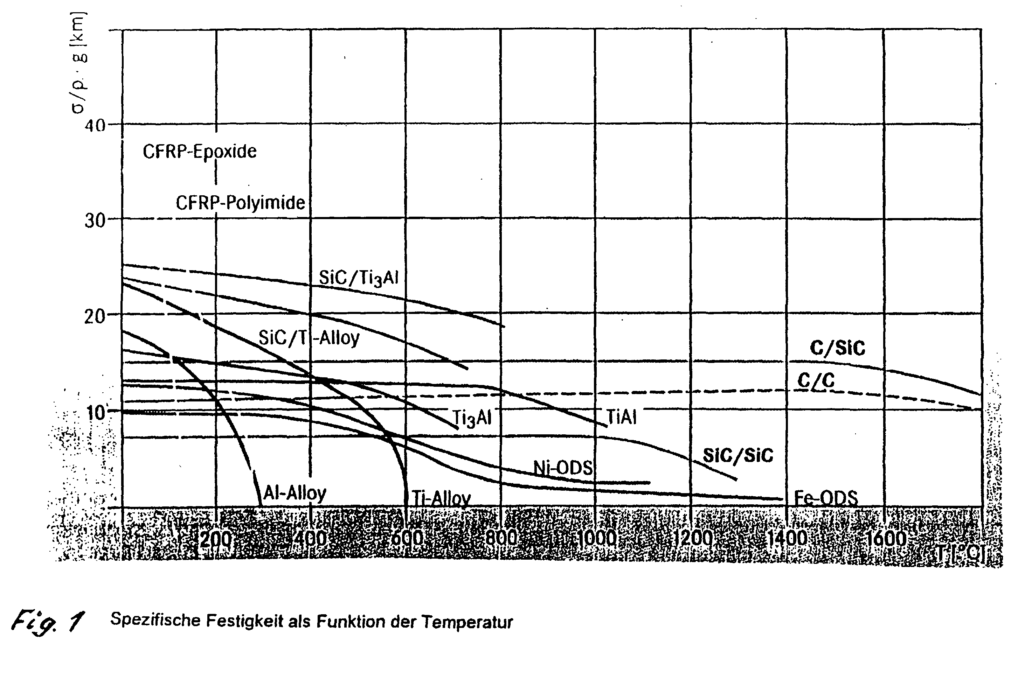

- Fig. 1: spezifische Festigkeit als Funktion der Temperatur,

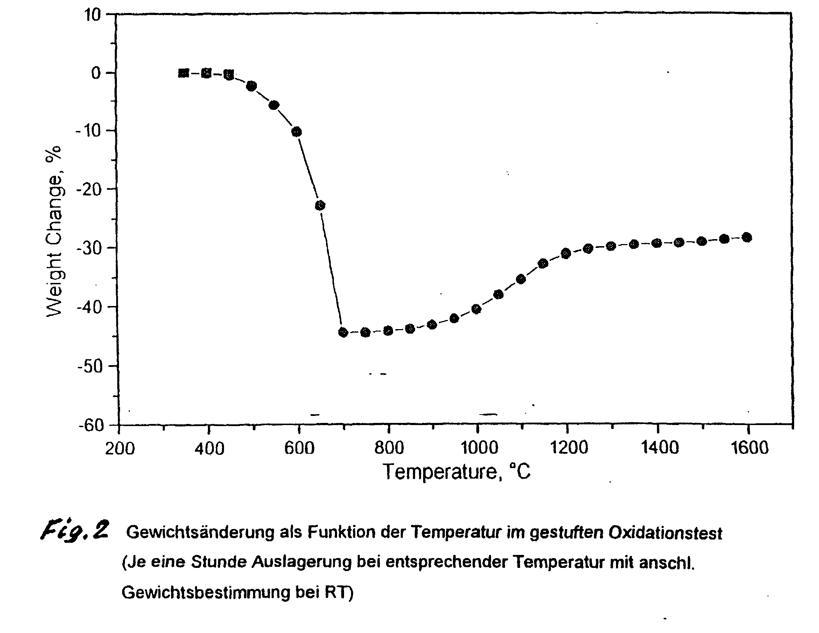

- Fig. 2: Gewichtsänderung als Funktion der Temperatur im gestuften Oxidationstest (je eine Stunde Auslagerung bei entsprechender Temperatur mit anschließender Gewichtsbestimmung bei RT),
- Fig. 3: Langzeitoxidationsbeständigkeit in Luft, gemessen durch Gewichtsänderung, wobei 3 % Abnahme oder Zunahme als Stabilitätsgrenze gewertet wurden und

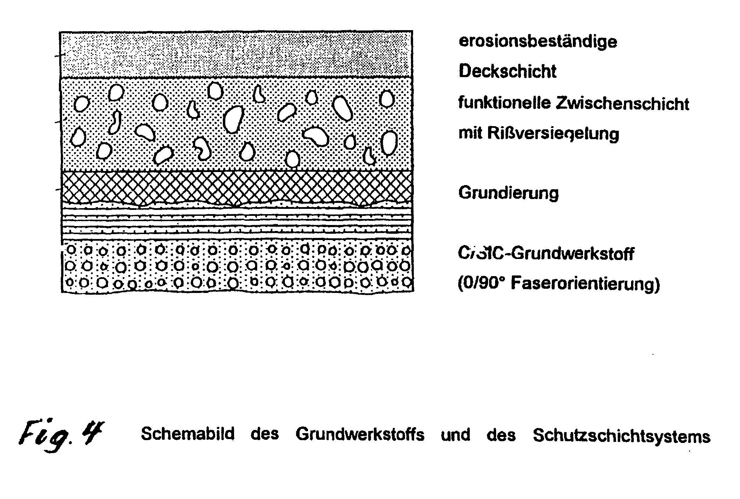

- Fig. 4: Schemabild des Grundwerkstoffs und des Schutzschichtsystems.

## Patentansprüche

1. Keramikverbundwerkstoff, welcher bis zu einer Temperatur von 1600°C einsetzbar ist, **gekennzeichnet durch** folgende Bestandteile:
a) 30 bis 60 Vol% C-Fasern
b) 10 bis 55 Vol% Matrix aus SiC und C, wobei das Gewichtsverhältnis SiC:C im Bereich zwischen 20:1 und 2:1 liegt
c) 5 bis 40 Vol% Porosität, die sowohl offen als auch geschlossen sein kann
und mindestens zwei der folgenden drei Schichten:
d) eine unmittelbar auf dem **durch** a+ b + c gebildeten Grundwerkstoff liegende untere Schutzschicht aus einer oder mehreren Verbindungen der Elemente: Si, C, B, O₂ mit einer Dicke zwischen 20 und 150 um
e) eine über d) liegenden mittleren Schutzschicht aus Übergangsmetall-Boriden und/oder Übergangsmetall-Siliziden in Kombination mit SiC, SiO₂ oder SiOC, mit einer Dicke von 50 bis 250 µm
f) eine über e) liegende obere Schutzschicht aus einer oder mehre- ren der Verbindungen SiC, SiO₂, Mo₃Si₂, Mo₃Si, Mo₅Si₃, ZrB, ZrB₂, ZrB₁₂, Si₃N₄, ZrO₂, Y₂O₃, Al₂O₃, Mischoxide Al₂O₃-SiO₂, SiOC mit einer Dicke von 20 bis 250 µm.

2. Keramikverbundwerkstoff nach Anspruch 1, **dadurch gekennzeichnet, dass** die unter a) genannten C-Fasern zuvor schon mit C beschichtet worden sind.

3. Keramikverbundwerkstoff nach Anspruch 1, **dadurch gekennzeichnet, dass** die unter a) genannten Fasern endlos sind.

4. Keramikverbundwerkstoff nach Anspruch 1, **dadurch gekennzeichnet, dass** die unter a) genannten Fasern Kurzfasern sind.

5. Keramikverbundwerkstoff nach Anspruch 1, **dadurch gekennzeichnet, dass** mittels der als Sauerstoffgetter wirkenden und unter e) genannten Schichtbestandteile Oxide gebildet werden.

6. Keramikverbundwerkstoff nach Anspruch 1, **dadurch gekennzeichnet, dass** mittels der als Glasbildner wirkenden und unter e) genannten Schichtbestandteile lokale Risse durch Glasbildung aus einer oder mehreren Si- oder B haltigen Verbindungen versiegelt werden.

7. Keramikverbundwerkstoff nach Anspruch 1, **dadurch gekennzeichnet, dass** mittels der unter d) genannten Schicht die Porosität des Grundwerkstoffs (a + b + c) oberflächlich verschlossen wird.

8. Keramikverbundwerkstoff nach Anspruch 1, **dadurch gekennzeichnet, dass** die unter d) genannte Schicht einen thermischen Ausdehnungskoeffizient α₂₀ = 3...6 x 10⁻⁶ K⁻¹ aufweist, dessen Wert zwischen den Werten der thermischen Ausdehnungskoeffizienten des parallel und des quer zur Faser angeordneten Grundwerkstoffs liegt.

9. Keramikverbundwerkstoff nach Anspruch 1, **dadurch gekennzeichnet, dass** die unter f) genannte Schicht als Erosionsschutz wirkt.

10. Keramikverbundwerkstoff nach Anspruch 1, **dadurch gekennzeichnet, dass** die unter f) genannte Schicht eine Emissivität zwischen 0,6 und 0,95 besitzt.

11. Keramikverbundwerkstoff nach Anspruch 1, **dadurch gekennzeichnet, dass** die unter d) genannte Schicht aus bis zu drei Teilschichten besteht.

12. Keramikverbundwerkstoff nach Anspruch 1, **dadurch gekennzeichnet, dass** die unter e) genannte Schicht aus bis zu 8 Teilschichten mit teilweise oder vollständig unterschiedlichen Zusammensetzungen besteht, die bei unterschiedlichen und sich ergänzenden Temperaturen als Glasbildner zur Rißversiegelung und/oder als Sauerstoffgetter aktiv werden.

13. Keramikverbundwerkstoff nach Anspruch 1, **dadurch gekennzeichnet, dass** die unter f) genannte Schicht aus bis zu 5 Teilschichten besteht.

14. Keramikverbundwerkstoff nach Anspruch 1, **dadurch gekennzeichnet, dass** die Matrix b) aus Si, B, N, C-Elementen zusammengesetzt ist (z.B. SiBN₃C, SiBCN).

15. Keramikverbundwerkstoff nach Anspruch 1, **dadurch gekennzeichnet, dass** die Matrix wie in b) und c) beansprucht, zusätzlich Nitride, Boride und/oder Silizide enthält, wie SiB₆, MoSi₂, Si₃N₄ zum Zweck des inneren Oxidationsschutzes.

16. Keramikverbundwerkstoff nach Anspruch 1, **dadurch gekennzeichnet, dass** der Grundwerkstoff vor der Beschichtung eine Rauhigkeit Ra von mindestens 5 µm aufweist.

17. Keramikverbundwerkstoff nach Anspruch 1, **dadurch gekennzeichnet, dass** alle 3 unter d, e, und f genannten Schichten vorhanden sind.

18. Keramikverbundwerkstoff nach Anspruch 17, **gekennzeichnet durch** Zugabe von Alkali- und/oder Erdalkali-haltigen Salzen in eine oder mehrere der Schichten d, e, f zum Zweck der verbesserten Glasbildung.

19. Keramikverbundwerkstoff nach Anspruch 1, **gekennzeichnet durch** eine Dichte < 2,3 g/m³ und eine Zugfestigkeit über 200 MPa.

20. Verfahren zur Herstellung des Keramikverbundwerkstoffs nach Anspruch 1, **dadurch gekennzeichnet, dass** der Grundwerkstoff a + b + c mittels Polymer-Infiltrations- und Pyrolyse-Verfahren herstellt wird.

21. Verfahren zur Herstellung des Keramikverbundwerkstoffs nach Anspruch 20, **dadurch gekennzeichnet, dass** SiC+C-Matrix aus einem Si-organischen Polymer und zusätzlichem Kohlenstoff gebildet wird.

22. Verfahren zur Herstellung des Keramikverbundwerkstoffs nach Anspruch 20, **dadurch gekennzeichnet, dass** die SiC+C-Matrix durch Reaktionsbinden aus einem C-Precursorpolymer und Si erzeugt wird.

23. Verfahren zur Herstellung des Keramikverbundwerkstoffs nach Anspruch 22, **dadurch gekennzeichnet, dass** das C-Precursorpolymer aus Phenolharz besteht.

24. Verfahren zur Herstellung des Keramikverbundwerkstoffs nach Anspruch 20, **dadurch gekennzeichnet, dass** die SiC-+C-Matrix aus einer Mischung von Si-organischen Precursorpolymeren und reinen C-Precursorpolymeren gebildet wird.

25. Verfahren zur Herstellung des Keramikverbundwerkstoffs nach einem der Ansprüche 21 bis 24, **gekennzeichnet durch** zusätzliche Reinfiltration mit Matrixprecursorpolymer oder mit Si-Polymeren und nachfolgende Pyrolyse zur Porositätsminderung.

26. Verwendung des Keramikverbundwerkstoffs nach Anspruch 1, in der Luft- und Raumfahrt für heiße Teile und Strukturen z.B. für Reentry-Hitzeschilde, Triebwerksdüsen, Thermalschutz von Raumtransporten oder Flugtriebwerken.

27. Verfahren zur Erhöhung der Wirksamkeit des Oxidationsschutzsystems für einen Keramikverbundwerkstoff nach Anspruch 1, **dadurch gekennzeichnet, dass** der Keramikverbundwerkstoff einer oxidierenden Vorbehandlung bei 900°C bis 1400°C unterzogen wird, wobei die Rißversiegelungsmechanismen schon vor der Benutzung aktiviert wurden.

28. Verfahren zur Herstellung des Keramikverbundwerkstoffs nach Anspruch 17, **gekennzeichnet durch** Aufbringung der Schutzschichten d + e + f über Schlicker aus anorganischen Füllstoffen, organische Bindemittel und Lösungsmittel **durch** Streichen, Rollen, Tauchen, Fluten oder Spritzen und nachfolgendes Einbrennen.

29. Verfahren zur Herstellung des Keramikverbundwerkstoffs nach Anspruch 28, **gekennzeichnet durch** Aufbringung der Schichten d und/oder f über Gasphasenabscheidung.

30. Verwendung des Keramikverbundwerkstoffs nach Anspruch 19 in oxidierender Atmosphäre zwischen 450°C und 1600°C über mehr als 50 Stunden und in oxidierender Atmosphäre zwischen 750°C und 1400°C über 1000 Stunden.

31. Verwendung des Keramikverbundwerkstoffs nach Anspruch 19 in Anwendungen, in denen eine Beständigkeit gegen mehr als 100-faches Aufheizen und Abkühlen mit 2 K/sec zwischen 400°C und 1250°C gefordert ist.

32. Verfahren zur Herstellung der Schutzschichten nach Anspruch 28, **dadurch gekennzeichnet, dass** die organischen Bindemittel beim Einbrennen in anorganischen Bestandteile der Schichten umgewandelt werden.

## Claims

1. Ceramic composite which can be used at a temperature up to 1 600°C, **characterized by** the following constituents:
a) from 30 to 60% by volume of carbon fibres,
b) from 10 to 55% by volume of a matrix composed of SiC and C, where the SiC:C weight ratio is in the range from 20:1 to 2:1,
c) from 5 to 40% by volume of porosity which may be both open and closed,
and at least two of the following three layers:
d) a lower protective layer located directly on the base material formed by a + b + c and comprising one or more compounds of the elements: Si, C, B, O₂ and having a thickness of from 20 to 150 µm,
e) an intermediate protective layer of transition metal borides and/or transition metal silicides in combination with SiC, SiO₂ or SiOC located on top of d) and having a thickness of from 50 to 250 µm,
f) an outer protective layer of one or more of the compounds SiC, SiO₂, Mo₃Si₂, Mo₃Si, Mo₅Si₃, ZrB, ZrB₂, ZrB₁₂, Si₃N₄, ZrO₂, Y₂O₃, Al₂O₃, mixed oxides Al₂O₃-SiO₂, SiOC located on top of e) and having a thickness of from 20 to 250 µm.

2. Ceramic composite according to Claim 1, **characterized in that** the carbon fibres specified under a) have previously been coated with C.

3. Ceramic composite according to Claim 1, **characterized in that** the fibres specified under a) are continuous.

4. Ceramic composite according to Claim 1, **characterized in that** the fibres specified under a) are short fibres.

5. Ceramic composite according to Claim 1, **characterized in that** oxides are formed from the layer constituents which are specified under e) and act as oxygen getters.

6. Ceramic composite according to Claim 1, **characterized in that** local cracks are sealed by glass formation from one or more Si- or B-containing compounds which are specified as layer constituents under e) and act as glass formers.

7. Ceramic composite according to Claim 1, **characterized in that** the porosity of the base material (a + b + c) is closed at the surface by means of the layer specified under d).

8. Ceramic composite according to Claim 1, **characterized in that** the layer specified under d) has a coefficient of thermal expansion α₂₀ = 3...6 × 10⁻⁶ K⁻¹, whose value lies between the values of the coefficients of thermal expansion of the base material parallel to and transverse to the fibres.

9. Ceramic composite according to Claim 1, **characterized in that** the layer specified under f) acts as erosion protection.

10. Ceramic composite according to Claim 1, **characterized in that** the layer specified under f) has an emissivity of from 0.6 to 0.95.

11. Ceramic composite according to Claim 1, **characterized in that** the layer specified under d) consists of up to three sublayers.

12. Ceramic composite according to Claim 1, **characterized in that** the layer specified under e) consists of up to 8 sublayers having partially or completely different compositions which become active as glass formers for sealing cracks and/or as oxygen getters at different and complementary temperatures.

13. Ceramic composite according to Claim 1, **characterized in that** the layer specified under f) consists of up to 5 sublayers.

14. Ceramic composite according to Claim 1, **characterized in that** the matrix b) is composed of the elements Si, B, N, C (e.g. SiBN₃C, SiBCN).

15. Ceramic composite according to Claim 1, **characterized in that** the matrix as claimed in b) and c) additionally contains nitrides, borides and/or silicides, e.g. SiB₆, MoSi₂, Si₃N₄, for the purpose of internal oxidation protection.

16. Ceramic composite according to Claim 1, **characterized in that** the base material has a roughness Ra of at least 5 µm prior to application of the coatings.

17. Ceramic composite according to Claim 1, **characterized in that** all 3 of the layers specified under d, e and f are present.

18. Ceramic composite according to Claim 17, **characterized by** addition of salts containing alkali metals and/or alkaline earth metals in one or more of the layers d, e, f for the purpose of improving glass formation.

19. Ceramic composite according to Claim 1, **characterized by** a density of < 2.3 g/m³ and a tensile strength above 200 MPa.

20. Process for producing the ceramic composite according to Claim 1, **characterized in that** the base material a + b + c is produced by means of polymer infiltration and pyrrolysis processes.

21. Process for producing the ceramic composite according to Claim 20, **characterized in that** the SiC+C matrix is formed from an organosilicon polymer and additional carbon.

22. Process for producing the ceramic composite according to Claim 20, **characterized in that** the SiC+C matrix is produced by reaction bonding from a C precursor polymer and Si.

23. Process for producing the ceramic composite according to Claim 22, **characterized in that** the C precursor polymer consists of phenolic resin.

24. Process for producing the ceramic composite according to Claim 20, **characterized in that** the SiC+C matrix is formed from a mixture of organosilicon precursor polymers and pure C precursor polymers.

25. Process for producing the ceramic composite according to any of Claims 21 to 24, **characterized by** additional reinfiltration with matrix precursor polymer or with Si polymers and subsequent pyrrolysis to reduce the porosity.

26. Use of the ceramic composite according to Claim 1 in aircraft and spacecraft for hot components and structures, e.g. for reentry heat shields, propulsion nozzles, thermal protection of space transports or aircraft engines.

27. Method of increasing the effectiveness of the oxidation protection system for a ceramic composite according to Claim 1, **characterized in that** the ceramic composite is subjected to an oxidative pretreatment at from 900°C to 1 400°C, so that the crack sealing mechanisms are activated before use.

28. Process for producing the ceramic composite according to Claim 17, **characterized by** application of the protective layers d + e + f by means of slips comprising inorganic fillers, organic binders and solvents by painting, rolling, dipping, flooding or spraying and subsequent firing.

29. Process for producing the ceramic composite according to Claim 28, **characterized by** application of the layers d and/or f by deposition from the gas phase.

30. Use of the ceramic composition according to Claim 19 in an oxidizing atmosphere at from 450°C to 1 600°C for more than 50 hours and in an oxidizing atmosphere at from 750°C to 1 400°C for 1 000 hours.

31. Use of the ceramic composition according to Claim 19 in applications in which resistance to more than 100 cycles of heating and cooling at 2 K/sec between 400°C and 1 250°C is required.

32. Process for producing the protective layers according to Claim 28, **characterized in that** the organic binders are converted into inorganic constituents of the layers on firing.

## Revendications

1. Composite céramique pouvant être utilisé jusqu'à une température de 1600°C, **caractérisé par** les constituants suivants :
a) de 30 à 60% en volume de fibres de carbone,
b) de 10 à 55% en volume d'une matrice composée de SiC et C, le rapport pondéral SiC:C étant dans la gamme comprise entre 20:1 et 2:1,
c) de 5 à 40% en volume de porosité, qui peut être aussi bien ouverte que fermée,
et au moins deux des trois couches suivantes :
d) une couche protectrice inférieure située directement sur le matériau de base formé par a + b + c et composée d'un ou de plusieurs composés des éléments : Si, C, B, O₂, et ayant une épaisseur comprise entre 20 et 150 µm,
e) une couche protectrice intermédiaire située pardessus d) et composée de borures de métaux de transition et/ou de siliciures de métaux de transition en combinaison avec du SiC, SiO₂ ou SiOC, et ayant une épaisseur comprise entre 50 et 250 µm,
f) une couche protectrice supérieure située pardessus e) et composée d'un ou de plusieurs des composés SiC, SiO₂, Mo₃Si₂, Mo₃Si, Mo₅Si₃, ZrB, ZrB₂, ZrB₁₂, Si₃N₄, ZrO₂, Y₂O₃, Al₂O₃, oxydes mixtes Al₂O₃-SiO₂, SiOC, et ayant une épaisseur comprise entre 20 et 250 µm.

2. Composite céramique selon la revendication 1, **caractérisé en ce que** les fibres de carbone mentionnées en a) ont été préalablement revêtues de carbone.

3. Composite céramique selon la revendication 1, **caractérisé en ce que** les fibres mentionnées en a) sont continues.

4. Composite céramique selon la revendication 1, **caractérisé en ce que** les fibres mentionnées en a) sont des fibres courtes.

5. Composite céramique selon la revendication 1, **caractérisé en ce que** des oxydes sont formés au moyen des constituants de couche mentionnés en e) et servant de getter d'oxygène.

6. Composite céramique selon la revendication 1, **caractérisé en ce que** des craquelures locales sont scellées par formation de verre à partir d'un ou de plusieurs composés siliciés ou borés au moyen des constituants de couche mentionnés en e) et servant d'agents vitrifiants.

7. Composite céramique selon la revendication 1, **caractérisé en ce que** la porosité du matériau de base (a + b + c) est fermée en surface au moyen de la couche mentionnée en d).

8. Composite céramique selon la revendication 1, **caractérisé en ce que** la couche mentionnée en d) présente un coefficient de dilatation thermique α20 = 3 ... 6 x 10⁻⁶ K⁻¹, dont la valeur est comprise entre les valeurs des coefficients de dilatation thermique du matériau de base disposé parallèlement et perpendiculairement à la fibre.

9. Composite céramique selon la revendication 1, **caractérisé en ce que** la couche mentionnée en f) sert de protection contre l'érosion.

10. Composite céramique selon la revendication 1, **caractérisé en ce que** la couche mentionnée en f) présente une émissivité comprise entre 0,6 et 0,95.

11. Composite céramique selon la revendication 1, **caractérisé en ce que** la couche mentionnée en d) comprend jusqu'à trois sous-couches.

12. Composite céramique selon la revendication 1, **caractérisé en ce que** la couche mentionnée en e) comprend jusqu'à 8 sous-couches ayant des compositions en partie ou totalement différentes, qui deviennent actives en tant qu'agents vitrifiants destinés au scellage de craquelures et/ou en tant que getter d'oxygène à des températures différentes et complémentaires.

13. Composite céramique selon la revendication 1, **caractérisé en ce que** la couche mentionnée en f) comprend jusqu'à 5 sous-couches.

14. Composite céramique selon la revendication 1, **caractérisé en ce que** la matrice b) est composée des éléments Si, B, N, C (par exemple SiBN₃C, SiBCN).

15. Composite céramique selon la revendication 1, **caractérisé en ce que** la matrice telle que revendiquée en b) et c) comprend en outre des nitrures, des borures et/ou des siliciures, tels que SiB₆, MoSi₂, Si₃N₄, dans le but d'une protection interne vis-à-vis de l'oxydation.

16. Composite céramique selon la revendication 1, **caractérisé en ce que** le matériau de base présente une rugosité Ra d'au moins 5 µm avant le revêtement.

17. Composite céramique selon la revendication 1, **caractérisé en ce que** l'ensemble des 3 couches mentionnées en d, e et f sont présentes.

18. Composite céramique selon la revendication 17, **caractérisé par** l'addition de sels renfermant des métaux alcalins et/ou des métaux alcalinoterreux dans une ou plusieurs des couches d, e, f dans le but d'une formation de verre améliorée.

19. Composite céramique selon la revendication 1, **caractérisé par** une densité inférieure à 2,3 g/m³ et une résistance en traction supérieure à 200 MPa.

20. Procédé de préparation du composite céramique selon la revendication 1, **caractérisé en ce que** le matériau de base a + b + c est préparé au moyen de procédés d'infiltration de polymère et de pyrolyse.

21. Procédé de préparation du composite céramique selon la revendication 20, **caractérisé en ce que** la matrice SiC + C est formée à partir d'un polymère organosilicié et de carbone additionnel.

22. Procédé de préparation du composite céramique selon la revendication 20, **caractérisé en ce que** la matrice SiC + C est produite par liaison réactionnelle à partir d'un polymère précurseur de C et de Si.

23. Procédé de préparation du composé céramique selon la revendication 22, **caractérisé en ce que** le polymère précurseur de C est constitué d'une résine phénolique.

24. Procédé de préparation du composite céramique selon la revendication 20, **caractérisé en ce que** la matrice SiC + C est formée à partir d'un mélange de polymères précurseurs organosiliciés et de polymères précurseurs de C purs.

25. Procédé de préparation du composite céramique selon l'une quelconque des revendications 21 à 24, **caractérisé par** une ré-infiltration supplémentaire avec du polymère précurseur matriciel ou avec des polymères siliciés et pyrolyse subséquente en vue de réduire la porosité.

26. Utilisation du composite céramique selon la revendication 1, dans l'aéronautique et la spationautique pour des composants et des structures chauds, par exemple pour des boucliers thermiques pour la rentrée, des tuyères de propulsion, la protection thermique de transporteurs spatiaux ou de groupes motopropulseurs.

27. Procédé d'augmentation de l'efficacité du système de protection contre l'oxydation pour un composite céramique selon la revendication 1, **caractérisé en ce que** le composite céramique est soumis à un prétraitement oxydant entre 900°C et 1400°C, les mécanismes de scellage de craquelures ayant déjà été activés avant l'utilisation.

28. Procédé de préparation du composite céramique selon la revendication 17, **caractérisé par** l'application des couches protectrices d + e + f par l'intermédiaire de barbotines de charges inorganiques, de liants organiques et de solvants, par enduction à la brosse, enduction au rouleau, immersion, noyage ou pulvérisation et cuisson subséquente.

29. Procédé de préparation du composite céramique selon la revendication 28, **caractérisé par** l'application des couches d) et/ou f) par dépôt en phase gazeuse.

30. Utilisation du composite céramique selon la revendication 19, dans une atmosphère oxydante entre 450°C et 1600°C pendant plus de 50 heures, et dans une atmosphère oxydante entre 750°C et 1400°C pendant 1000 heures.

31. Utilisation du composite céramique selon la revendication 19, dans des applications dans lesquelles une résistance vis-à-vis de plus de 100 cycles de chauffage et de refroidissement à 2 K/s entre 400°C et 1250°C est requise.

32. Procédé de production des couches protectrices selon la revendication 28, **caractérisé en ce que** les liants organiques sont transformés en constituants inorganiques des couches par cuisson.
